Europäisches Patentamt

European Patent Office

Office européen des brevets

(11) Veröffentlichungsnummer: **0 363 664 B1**

## (12) EUROPÄISCHE PATENTSCHRIFT

(45) Veröffentlichungstag der Patentschrift: **29.06.94**

(21) Anmeldenummer: **89116932.8**

(22) Anmeldetag: **13.09.89**

(51) Int. Cl.5: **B01D 53/34**, C10K 1/08

### (54) Verfahren zur Entschwefelung von Koksofengas.

(30) Priorität: **13.10.88 DE 3834847**

(43) Veröffentlichungstag der Anmeldung:
**18.04.90 Patentblatt 90/16**

(45) Bekanntmachung des Hinweises auf die
Patenterteilung:
**29.06.94 Patentblatt 94/26**

(84) Benannte Vertragsstaaten:
**BE DE ES FR IT NL**

(56) Entgegenhaltungen:
**DE-A- 2 659 015**
**FR-A- 2 264 080**
**US-A- 4 125 597**

(73) Patentinhaber: **Krupp Koppers GmbH**
**Altendorfer Strasse 120**
**D-45143 Essen(DE)**

(72) Erfinder: **Diemer, Peter, Dr.**
**Schliepersberg 2**
**D-4300 Essen 1(DE)**

EP 0 363 664 B1

EP 0 363 664 B1

**Beschreibung**

Die Erfindung betrifft ein Verfahren zur Entschwefelung von Koksofengas unter Niederdruck, bei dem die Entschwefelung des von Ammoniak, Teer, Naphthalin und Benzol weitgehend befreiten Gases unter Anwendung einer Pottaschewäsche erfolgt, wobei der bei der Pottaschewäsche anfallende Schwefelwasserstoff in einer nachgeschalteten Schwefelsäure- oder Claus-Anlage weiterverarbeitet wird.

Bei der Entschwefelung von Koksofengas werden in der Praxis im wesentlichen zwei unterschiedliche Verfahrensgruppen eingesetzt. Bei der ersten Verfahrensgruppe handelt es sich um die sogenannten nassen Neutralisations-Verfahren. Zu dieser Verfahrensgruppe gehören beispielsweise die ammoniakalische Kreislaufwäsche und die Alkalicarbonatwäschen, insbesondere die Pottaschewäsche. So ist beispielsweise aus der FR-A-2 264 080 ein Verfahren zur Entfernung von Schwefelwasserstoff aus Koksofengas bekannt, bei dem das entteerte und gekühlte Rohgas vom Ammoniak befreit und daran anschließend einer Pottasche- oder Sodawäsche unterworfen wird. Der dabei anfallende Schwefelwasserstoff kann hierbei gemeinsam mit dem bei der Nachbehandlung des Abwassers aus der Ammoniak-Wäsche anfallenden Schwefelwasserstoff in einer nachgeschalteten Schwefelsäure- oder Claus-Anlage zu Schwefelsäure oder Elementarschwefel weiterverarbeitet werden.

Die zweite Verfahrensgruppe umfaßt die nassen Oxidationsverfahren, bei denen der im Gas enthaltene Schwefelwasserstoff unter Anwendung organischer Sauerstoffüberträger zu Elementarschwefel oxidiert wird. Zu dieser Verfahrensgruppe gehören das Perox-Verfahren und das Stretford-Verfahren.

Bezüglich des Entschwefelungsgrades von Koksofengas sind die Anforderungen in den letzten Jahren laufend erhöht worden, so daß heute zum Teil bereits ein Restschwefelgehalt im niederdruckgereinigten Gas verlangt wird, der den Wert von 2 mg $H_2S/m_n^3$ Gas nicht übersteigt. Es kommt daher immer häufiger vor, daß mit den nassen Neutralisationsverfahren die in der Praxis geforderten Restschwefelgehalte nicht mehr erreicht werden. Die nassen Oxidationsverfahren erreichen zwar sehr sicher niedrige Restschwefelgehalte. Sie produzieren jedoch so viele umweltschädigende Abfallstoffe, daß ihr Einsatz bei den heute geltenden Auflagen für eine Totalentschwefelung des Koksofengases nicht mehr in Frage kommt. Hierbei bewirkt insbesondere die im Koksofengas vorkommende Blausäure einen großen Abwasseranfall. Auch der mit den Oxidationsverfahren erzeugte Elementarschwefel besitzt nicht die Reinheit von handelsüblichem Schwefel.

Der Erfindung liegt deshalb die Aufgabe zugrunde, ein verbessertes Verfahren zur Entschwefelung von Koksofengas unter Niederdruck zu schaffen, mit dem einerseits eine Entschwefelung des Gases bis auf einen Restschwefelgehalt von 2 mg $H_2S/m_n^3$ Gas gelingt und bei dem andererseits möglichst wenig umweltschädigende Abfallstoffe anfallen.

Diese Aufgabe wird gelöst durch ein Verfahren der eingangs genannten Art, das erfindungsgemäß dadurch gekennzeichnet ist, daß das Gas durch die Pottaschwäsche bis auf 0,2 bis 0,5 g $H_2S/m_n^3$ Gas entschwefelt und daran anschließend in einer Stretford-Wäsche bis auf 2 bis 5 mg $H_2S/m_n^3$ Gas feinentschwefelt wird, wobei der bei der Stretford-Wäsche anfallende Elementarschwefel gemeinsam mit dem $H_2S$-reichen Sauergas aus der Pottaschewäsche in der Schwefelsäure- oder Claus-Anlage aufgearbeitet wird und aus der in der Stretford-Wäsche umlaufenden Waschlösung jeweils ein Teilstrom ausgeschleust und entweder in die Gaskondensation hinter dem Koksofen zurückgeführt oder der Einsatzkohle vor dem Eintritt in den Koksofen zugesetzt sowie die Abluft aus den Oxideuren der Stretford-Wäsche als Verbrennungsluft in der Schwefelsäure- oder Claus-Anlage mitgenutzt wird.

Das heißt, bei der erfindungsgemäßen Arbeitsweise wird ein nasses Neutralisationsverfahren mit einem nassen Oxidationsverfahren kombiniert. Dabei hat die erfindungsgemäß vorgeschlagene Kombination von Pottaschewäsche mit der Stretfordwäsche Vorteile gegenüber anderen möglichen Kombinationen, da durch die Pottaschewäsche eine fast totale Blausäureentfernung aus dem Gas erreicht wird. Deshalb fällt in der nachgeschalteten Stretford-Wäsche kaum Abwasser an.

Sowohl die Pottaschewäsche als auch die Stretford-Wäsche sind an sich bekannte Entschwefelungsverfahren. In der Pottaschewäsche wird der Schwefelwasserstoff mit einer wässerigen Pottaschelösung aus dem Koksofengas ausgewaschen. Der ausgewaschene Schwefelwasserstoff wird in der Pottascheregenerierung unter Vakuum als Sauergas gewonnen.

Bei diesem Prozeß treten folgende wesentliche Reaktionen auf:

Pottaschewascher: $\qquad K_2CO_3 + H_2S = KHS + KHCO_3$

Pottascheregenerierung: $\qquad KHS + KHCO_3 = H_2S + K_2CO_3$

Zusätzlich laufen noch Nebenreaktionen mit Kohlendioxid und Blausäure ab.

Das Koksofengas durchströmt den $H_2S$-Wascher von unten nach oben und wird durch Berieselung mit regenerierter Pottaschelösung entschwefelt. Gleichzeitig erfolgt eine Teilentfernung des $CO_2$ und eine nahezu vollständige Entfernung des HCN. Die beladene Pottaschelösung aus dem $H_2S$-Wascher wird

2

anschließend unter Vakuum im $H_2S$-Abtreiber vom $H_2S$ befreit. Der ausgetriebene Schwefelwasserstoff wird als sogenanntes Sauergas gewonnen, das zuvor in der Vakuumpumpe verdichtet wurde. Die Wärme für die Regenerierung der Pottaschelösung wird indirekt zugeführt, wobei der größte Teil durch die fühlbare Wärme des Spülwasserkreislaufs der Gaskondensation gedeckt wird.

In der anschließenden Stretford-Wäsche wird als Waschflüssigkeit eine Natriumkarbonatlösung mit Zusätzen von Anthrachinondisulfonsäure (ADS), Kalium-Natriumtartrat und Natriumvanadat verwendet.

In der Anlage treten folgende Hauptreaktionen auf:

Stretford-Wascher:

$$2 Na_2CO_3 + 2 H_2S = 2 NaHS + 2 NaHCO_3$$

Das gebildete Hydrogensulfid wird durch Vanadat zu Elementarschwefel oxidiert.

$$4 NaVO_3 + 2 NaHS + H_2O = Na_2V_4O_9 + 4 NaOH + 2 S$$

Durch Reaktionen mit oxidierter ADS wird das gebildete vierwertige Vanadium wieder zu fünfwertigem oxidiert.

$$Na_2V_4O_9 + 2 NaOH + 2 ADS (oxid.) + H_2O = 4 NaVO_3 + 2 ADS (red.)$$

Die reduzierte ADS wird in einem sogenannten Oxideur wieder durch Luft oxidiert.

$$2 ADS (red.) + O_2 = 2 ADS (oxid.) + 2 H_2O$$

Das gebildete Natriumhydroxid reagiert mit Hydrogenkarbonat zu Natriumkarbonat.

$$2 NaOH + 2 NaHCO_3 = 2 Na_2CO_3 + 2 H_2O$$

Die Summierung der Gleichungen ergibt

$$2 H_2S + O_2 = 2 H_2O + 2 S$$

Im Oxideur flotiert der anfallende elementare Schwefel nach oben und fließt als Schwefelschaum ab. Die regenerierte Waschlösung wird zum Wascher zurückgeführt. In Dekantierzentrifugen wird der Elementarschwefel von der restlichen Waschlösung des Schwefelschaums getrennt und in einem Autoklaven aufgeschmolzen. Er wird als flüssiger Schwefel der Schwefelsäureanlage oder der Clausanlage zugeführt.

Bei allen Entschwefelungsverfahren, die elementaren Schwefel durch Oxidation des $H_2S$ erzeugen, sind Nebenreaktionen unvermeidbar. Primär entsteht Thiosulfat, daneben auch Sulfat. Bei Anwesenheit von Cyanwasserstoff im Gas bildet sich zusätzlich Thiocyanat. Um diese Salze, die sich im Laufe der Zeit in der Waschlösung anreichern, nicht über ein bestimmtes zulässiges Maß ansteigen zu lassen, wird jeweils ein bestimmter Teilstrom aus der Waschlösung ausgeschleust und erfindungsgemäß der Gaskondensation zugeführt oder der Einsatzkohle zugesetzt.

Sofern gemäß der ersten Variante des erfindungsgemäßen Verfahrens das $H_2S$-reiche Sauergas zusammen mit dem Schwefel aus der Stretford-Wäsche zu Schwefelsäure weiterverarbeitet werden soll, werden die wesentlichen Komponenten in einer Brennkammer mit Luftüberschuß gemäß folgender Reaktionsgleichungen verbrannt:

$$H_2S + 1,5 O_2 = SO_2 + H_2O$$
$$HCN + 1,25 O_2 = 0,5 H_2O * 0,5 N_2 + CO_2$$
$$S + O_2 = SO_2$$

Vorhandene Kohlenwasserstoffe werden im wesentlichen zu $CO_2$ und Wasserdampf umgesetzt. Die erforderliche Verbrennungsluft wird über ein Brennluftgebläse dem Brenner zugeführt. Dafür wird auch die Abluft aus den Oxideuren der Stretford-Wäsche mitverwendet. Im Verbrennungsofen wird durch geregelte Zugabe von Sekundärluft der Sauerstoffgehalt des Prozeßgases eingestellt.

Anschließend wird das Prozeßgas, das im Verbrennungsofen gebildet wurde, in einem Abhitzekessel gekühlt und danach das in ihm enthaltene $SO_2$ in einen sogenannten $SO_2$-Konverter gemäß der Reaktionsgleichung

$$SO_2 + 1/2\ O_2 = SO_3$$

oxidiert.

Hinter dem $SO_2$-Konverter wird das $SO_3$-reiche Prozeßgas zunächst in einem Gaskühler gekühlt, ehe es in den Heißkondensator gelangt. Im Gaskühler und dem Heißkondensator reagiert das $SO_3$ mit $H_2O$ zu Schwefelsäure gemäß der Reaktionsformel

$$SO_3 + H_2O = H_2SO_4$$

Die gebildete Schwefelsäure kann aus dem Sumpf des Heißkondensators zwecks Weiterverwendung, z.B. zur Ammonsulfatgewinnung, abgezogen werden. Der bei der Kühlung anfallende Abhitzedampf kann in die vorgeschalteten Verfahrensstufen zurückgeführt und dort verwendet werden.

Bei der zweiten Variante des erfindungsgemäßen Verfahrens werden das $H_2S$-reiche Sauergas aus der Pottaschewäsche und der Elementarschwefel aus der Stretford-Wäsche in einer Clausanlage aufgearbeitet. Hierbei wird der Schwefelwasserstoff des Sauergases in einer Brennkammer zum Teil zu $SO_2$ verbrannt, während die anderen Komponenten des Sauergases, wie weiter oben im Zusammenhang mit der Schwefelsäureherstellung beschrieben, umgesetzt werden.

Gleichzeitig wird der Elementarschwefel aus der Stretford-Wäsche in die Brennkammer eingeleitet, so daß er an den Reaktionen teilnimmt. Das gebildete $SO_2$ reagiert mit dem nicht umgesetzten Schwefelwasserstoff unter Bildung von Elementarschwefel gemäß folgender Gleichung:

$$SO_2 + 2\ H_2S = 3\ S + 2\ H_2O$$

Die Umsetzung erfolgt dabei in Gegenwart von hierfür geeigneten handelsüblichen Katalysatoren, z.B. Bauxit-Katalysatoren. Zur Deckung des Sauerstoffbedarfs der Verbrennung kann auch in diesem Falle die Abluft aus den Oxideuren der Stretford-Wäsche mitverwendet werden. Der bei der Kühlung des aus der Clausanlage austretenden heißen Prozeßgases anfallende Abhitzedampf kann in die vorgeschalteten Verfahrensstufen zurückgeführt und dort mitverwendet werden. Durch die Kühlung, bei der das Prozeßgas bis fast auf die Temperatur des Schwefelerstarrungspunktes abgekühlt wird, erfolgt die Abscheidung des Schwefels aus dem Gas durch Kondensation. Der abgeschiedene Schwefel, dessen Qualität wesentlich besser ist als die des nach dem Stretford-Verfahren gewonnenen Schwefels, wird von dort seiner weiteren Verwendung zugeführt. Das vom Schwefel befreite Claus-Restgas enthält noch Schwefelwasserstoff und kann daher nicht ohne weiteres in die Atmosphäre abgelassen werden. Erfindungsgemäß ist deshalb vorgesehen, daß dieses Restgas dem Koksofengas vor dem Eintritt in die Pottaschewäsche zugesetzt wird.

Der gesamte Ablauf des erfindungsgemäßen Verfahrens soll nachfolgend noch durch die in den Abbildungen dargestellten Fließschemata verdeutlicht werden, wobei auf die vorstehende Beschreibung der einzelnen Verfahrensschritte Bezug genommen wird. Hierbei zeigen:

Fig. 1 den Verfahrensablauf bei Einsatz einer Schwefelsäureanlage zur Aufarbeitung des Sauergases und des Elementarschwefels sowie

Fig. 2 den Verfahrensablauf bei Einsatz einer Claus-Anlage zur Aufarbeitung des Sauergases und des Elementarschwefels.

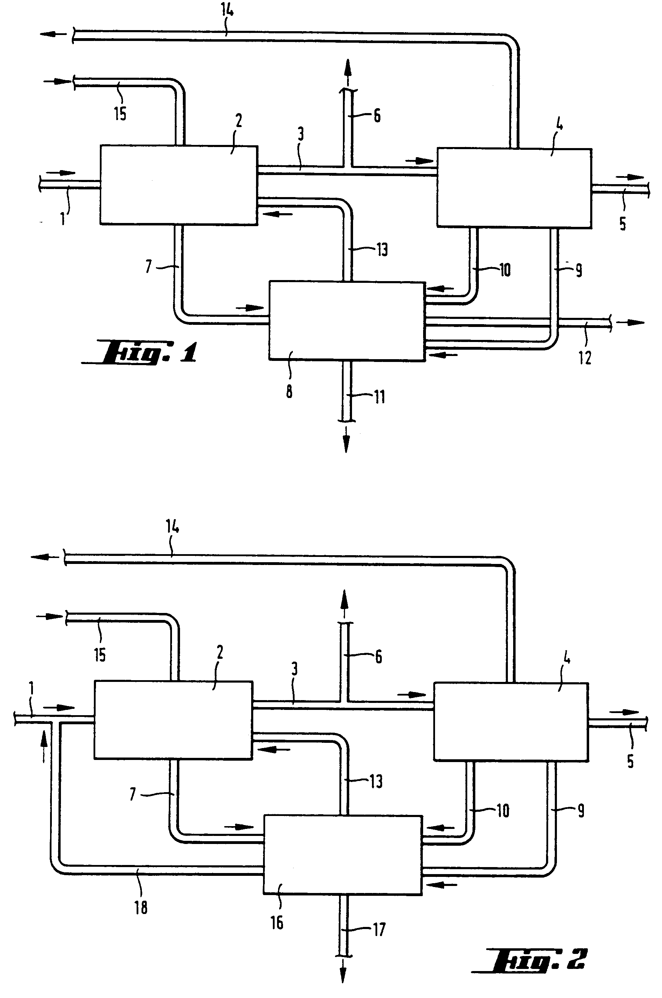

Bei dem in Fig. 1 dargestellten Fließschema wird das bis auf eine Temperatur von 20 - 30°C gekühlte Koksofengas, das in der vorgeschalteten Gasbehandlung von Teer, Naphthalin, Benzol und Ammoniak weitgehend befreit worden ist, über die Leitung 1 in die Pottaschewäsche 2 eingeleitet. In dieser erfolgt eine Entschwefelung des Gases bis auf einen Schwefelgehalt von 0,2 bis 0,5 g $H_2S/m_n^3$ Gas. Anschließend wird dieses teilentschwefelte Gas über die Leitung 3 der Stretford-Wäsche 4 zugeführt, in der die Feinentschwefelung des Gases bis auf einen Restschwefelgehalt von 2 bis 5 mg $H_2S/m_n^3$ Gas erfolgt. Dieses feinentschwefelte Gas wird dann über die Leitung 5 seiner weiteren Verwendung zugeführt. Bei Bedarf kann selbstverständlich auch ein Teilstrom des teilentschwefelten Gases aus der Leitung 3 über die Leitung 6 abgezogen und seiner weiteren Verwendung, z.B. als Heizgas für die Unterfeuerung der Koksöfen, zugeführt werden. Das bei der Pottaschewäsche 2 anfallende $H_2S$-reiche Sauergas wird in diesem Falle über die Leitung 7 in die Schwefelsäureanlage 8 eingeleitet. In diese Anlage werden auch der bei der Stretford-Wäsche 4 anfallende Elementarschwefel über die Leitung 9 sowie die Abluft aus den Oxideuren der Stretford-Wäsche 4 über die Leitung 1o eingeleitet. Die erzeugte Schwefelsäure wird über die Leitung 11 abgezogen und ihrer weiteren Verwendung, z.B. bei der Ammoniumsulfat-Herstellung, zugeführt. Das anfallende Abgas verläßt die Schwefelsäureanlage 8 über die Leitung 12. Der in der Schwefelsäureanlage 8 anfallende Abhitzedampf kann über die Leitung 13 in die Pottaschewäsche 2 zurückgeführt und dort zur Regenerierung der beladenen Pottaschelösung mitverwendet werden. Aus der Stretford-Wäsche 4 wird jeweils ein Teilstrom der umlaufenden Waschlösung ausgeschleust und über die Leitung 14 der im Fließschema nicht dargestellten Gaskondensation zugeführt, wo dieser Teilstrom dem Spülwasser zugesetzt wird, das der Abscheidung der teerhaltigen und sonstigen Kondensate aus dem Koksofenrohgas dient. Die fühlbare Wärme des Spülwasserkreislaufes der Gaskondensation kann dabei gleichzeitig für die Regenerierung der beladenen Pottaschelösung genutzt werden. Die Gaskondensation steht daher über die Leitung 15 mit der Pottaschewäsche 2 in Verbindung. Eine andere Möglichkeit zur Beseitigung des ausgeschleusten Teilstromes der Waschlösung aus der Stretford-Wäsche 4 besteht darin, diesen Teilstrom der Einsatzkohle vor dem Eintritt in den Koksofen zuzusetzen.

Die Fig. 2 zeigt das Fließschema für die andere Variante des erfindungsgemäßen Verfahrens, bei der das $H_2S$-reiche Sauergas aus der Pottaschewäsche 2 sowie der Elementarschwefel und die Abluft aus der Stretford-Wäsche 4 in einer Claus-Anlage 16 weiterverarbeitet werden. Hierbei wird der in der Claus-Anlage 16 gewonnene Schwefel über die Leitung 17 abgezogen, während das anfallende Claus-Restgas über die Leitung 18 abgeführt und dem Koksofengas in der Leitung 1 vor dessen Eintritt in die Pottaschewäsche 2 oder in der Gaskondensation zugesetzt wird. Im übrigen haben wir mit Fig. 1 übereinstimmenden Bezugszeichen die gleiche Bedeutung wie dort und brauchen deshalb nicht noch einmal näher erläutert zu werden.

Abschließend soll die Wirkungsweise des erfindungsgemäßen Verfahrens an Hand eines Ausführungsbeispieles erläutert werden. Hierbei sollen 45 000 $m_n^3$/h Koksofengas nach dem erfindungsgemäßen Verfahren entschwefelt werden, wobei das anfallende Sauergas aus der Pottaschewäsche und der Schwefel aus der Stretfordwäsche in einer Schwefelsäureanlage zu 95 %-iger $H_2SO_4$ aufgearbeitet werden sollen. Das zu entschwefelnde Koksofengas wird hierbei mit einer Temperatur von 23 bis 25°C und einem Druck von + 65 mbar über die Leitung 1 in das Verfahren eingeführt. Das Gas weist folgende Zusammensetzung auf:

| $CO_2$ | | 1,o bis | 2,o Vol.-% |
|---|---|---|---|
| CnHm | | 2,o bis | 4,5 " " |
| $O_2$ | | o,2 bis | o,5 " " |
| CO | | 4,5 bis | 5,o " " |
| $H_2$ | | 62,o bis | 63,o " " |
| $CH_4$ | | 22,o bis | 25,o " " |
| $N_2$+ Rest | | 2,o bis | 4,o " " |

Begleitstoffe:

| Teer | | | o,o2 | $g/m_n^3$ |
|---|---|---|---|---|
| Naphthalin | | | o,15 | " |
| Schwefelwasserstoff | 5 bis | 7 | | " |
| Organischer Schwefel | o,2 bis | o,4 | | " |
| Ammoniak | o,o15 bis | o,o5 | | " |
| Cyanwasserstoff | 1,o bis | 1,5 | | " |
| Benzol | 2 bis | 4 | | " |

Dieses Gas wird, wie weiter oben beschrieben wurde, durch die Pottaschewäsche und die Stretford-Wäsche entschwefelt, so daß es im Anschluß daran mit einer Temperatur von 23 bis 25°C und einem Druck von + 40 mbar über die Leitung 5 dem Gasometer zugeführt werden kann. Die Zusammensetzung des feinentschwefelten Gases ist dabei folgende:

| | | |
|---|---|---|
| $CO_2$ | 0,8 bis 1,8 | Vol.-% |
| $C_nH_m$ | 2,5 bis 4,5 | " " |
| $O_2$ | 0,3 bis 0,6 | " " |
| CO | 4,5 bis 5,0 | " " |
| $H_2$ | 61,9 bis 62,9 | " " |
| $CH_4$ | 21,9 bis 24,9 | " " |
| $N_2$ + Rest | 2,3 bis 4,3 | " " |

Begleitstoffe:

| | | |
|---|---|---|
| Teer | 0,02 | $g/m_n^3$ |
| Naphthalin | 0,15 | " |
| Schwefelwasserstoff | 2 | $mg/m_n^3$ |
| Organischer Schwefel | 0,2 bis 0,4 | $g/m_n^3$ |
| Ammoniak | 0,015 bis 0,05 | " |
| Cyanwasserstoff | 0,1 | " |
| Benzol | 2 bis 4 | " |

Bei Verarbeitung der weiter oben genannten Gasmenge werden gleichzeitig in der Schwefelsäureanlage pro Tag ca. 22 Tonnen 95 %-ige $H_2SO_4$ erzeugt, und aus der Stretford-Wäsche werden pro Tag ca. 1,6 m³ ausgebrauchte Waschlösung abgestoßen und zur Gaskondensation zurückgeführt. Die abgestoßene Waschlösung hat folgende Zusammensetzung:

| Natrium (gerechnet als $Na_2CO_3$) | ca. | 19 | g/l |
|---|---|---|---|
| ADS | " | 2,5 | g/l |
| $NaVO_3$ | " | o,9 | g/l |
| $C_4H_4O_6KNa$ | " | 2,4 | g/l |
| $Na_2SO_4$ | " | 9,4 | g/l |
| $Na_2S_2O_3$ | " | 21 | g/l |
| NaSCN | " | 17o | g/l |

Selbstverständlich wird dabei die abgestoßene Waschlösung durch frische Waschlösung ersetzt. Durch die Rückführung der abgestoßenen Waschlösung in die Gaskondensation wird ein unerwünschter Abwasseranfall vermieden, so daß beim erfindungsgemäßen Verfahren als Nebenprodukte lediglich Schwefelsäure oder Elementarschwefel anfallen.

**Patentansprüche**

1. Verfahren zur Entschwefelung von Koksofengas unter Niederdruck, bei dem die Entschwefelung des von Ammoniak, Teer, Naphthalin und Benzol weitgehend befreiten Gases unter Anwendung einer Pottaschewäsche erfolgt, wobei der bei der Pottaschewäsche anfallende Schwefelwasserstoff in einer nachgeschalteten Schwefelsäure- oder Claus-Anlage weiterverarbeitet wird, dadurch gekennzeichnet, daß das Gas durch die Pottaschewäsche bis auf 0,2 bis 0,5 g $H_2S/m_n^3$ Gas entschwefelt und daran anschließend in einer Stretford-Wäsche bis auf 2 bis 5 mg $H_2S/m_n^3$ Gas feinentschwefelt wird, wobei der bei der Stretford-Wäsche anfallende Elementarschwefel gemeinsam mit dem $H_2S$-reichen Sauergas aus der Pottaschewäsche in der Schwefelsäure- oder Claus-Anlage aufgearbeitet wird und aus der in der Stretford-Wäsche umlaufenden Waschlösung jeweils ein Teilstrom ausgeschleust und entweder in die Gaskondensation hinter dem Koksofen zurückgeführt oder der Einsatzkohle vor dem Eintritt in den Koksofen zugesetzt sowie die Abluft aus den Oxideuren der Stretford-Wäsche als Verbrennungsluft in der Schwefelsäure- oder Claus-Anlage mitgenutzt wird.

2. Verfahren nach Anspruch 1, dadurch gekennzeichnet, daß der in der Schwefelsäure- und der Claus-Anlage anfallende Abhitzedampf in den vorgeschalteten Verfahrensstufen, insbesondere zur Regenerierung der beladenen Pottaschelösung, mitgenutzt wird.

3. Verfahren nach den Ansprüchen 1 und 2, dadurch gekennzeichnet, daß das in der Claus-Anlage anfallende Restgas dem Koksofengas vor dessen Eintritt in die Pottaschewäsche zugesetzt wird.

**Claims**

1. Process for the desulphurization of coke oven gas under reduced pressure, in which the desulphurization of the gas, substantially freed from ammonia, tar, naphthalene and benzene, is carried out with the use of potash scrubbing, the hydrogen sulphide arising in the potash scrubbing being further processed in a downstream sulphuric acid plant or Claus plant, characterized in that the gas is desulphurized by the potash scrubbing down to 0.2 to 0.5 g of $H_2S/m^3$ (S.T.P.) and subsequently thereto is finely desulphurized in a Stretford scrubbing down to 2 to 5 mg of $H_2S/m^3$ (S.T.P.), the elemental sulphur arising in the Stretford scrubbing, together with the $H_2S$-rich sour gas from the potash scrubbing being further processed in the sulphuric acid plant or Claus plant and a part-stream being ejected each time from the scrubbing solution circulating in the Stretford scrubbing and either returned in the gas condensation downstream of the coke oven or added to the feed coal before entry into the coke oven and the exhaust air from the oxidizers of the Stretford scrubbing being co-used as combustion air in the sulphuric acid plant or Claus plant.

2. Process according to Claim 1, characterized in that the waste-heat steam arising in the sulphuric acid plant and Claus plant is co-used in the upstream process stages, in particular for the regeneration of the loaded potash solution.

3. Process according to Claims 1 and 2, characterized in that the residual gas arising in the Claus plant is added to coke oven gas before entry thereof in the potash scrubbing.

**Revendications**

1. Procédé pour la désulfuration de gaz de four à coke sous basse-pression, dans lequel la désulfuration du gaz, largement débarrassé de l'ammoniac, du goudron, du naphtalène et du benzène, a lieu en utilisant une lessive de carbonate de potassium, l'hydrogène sulfuré, se formant lors du lessivage au carbonate de potassium étant soumis à un autre traitement dans une installation à acide sulfurique ou dans une installation de Claus montées en aval,
caractérisé en ce que le gaz est désulfuré par le lessivage au carbonate de potassium jusqu'à présenter de 0,2 à 0,5 g de $H_2S$ par $m^3$ normal de gaz et qu'il est ensuite désulfuré de façon poussée dans un dispositif de lessivage Stretford jusqu'à une teneur de 2,5 mg de $H_2S$ par $m^3$ normal de gaz, le soufre élémentaire se formant lors du lessivage Stretford étant traité, en commun avec le gaz acide riche en $H_2S$ provenant du lessivage au carbonate de potassium, dans l'installation à acide sulfurique ou dans l'installation de Claus, et que la solution de lavage en circulation dans le lessiveur Stretford est chaque fois éclusée en un courant partiel et est soit renvoyée derrière le four à coke dans la condensation du gaz, soit ajoutée au charbon mis en oeuvre avant l'entrée dans le four à coke, en utilisant également l'air évacué des oxydeurs du dispositif de lessivage de Stratford, en tant qu'air comburant dans l'installation à acide sulfurique ou dans l'installation de Claus.

2. Procédé selon la revendication 1,
caractérisé par le fait que la vapeur des chaleurs perdues se rassemblant dans l'installation à acide sulfurique et dans l'installation de Claus dans les étages du procédé prévus en amont est utilisée conjointement, en particulier pour régénérer la solution de carbonate de potassium chargée.

3. Procédé selon les revendications 1 et 2,
caractérisé en ce que le gaz résiduel se rassemblant dans l'installation de Claus est ajouté au gaz de four à coke avant son entrée dans le lessiveur à carbonate de potassium.

Fig. 1

Fig. 2